# EUROPÄISCHE PATENTSCHRIFT

(11) **EP 2 901 220 B1**
(45) Veröffentlichungstag und Bekanntmachung des Hinweises auf die Patenterteilung: **10.10.2018**
(21) Anmeldenummer: 13753187.7
(22) Anmeldetag: 28.08.2013
(51) Int. Cl.: G05B 19/401, G01B 21/02

(54) **MESSGERÄT DER PROZESSAUTOMATISIERUNGSTECHNIK**
MEASURING DEVICE FOR PROCESS AUTOMATION TECHNOLOGY
APPAREIL DE MESURE POUR L'AUTOMATISATION DE PROCESSUS

(30) Priorität: 25.09.2012 DE 102012109010
(43) Veröffentlichungstag der Anmeldung: 05.08.2015
(73) Patentinhaber: Endress+Hauser SE+Co. KG, 79689 Maulburg (DE)
(72) Erfinder: SPANKE, Dietmar, 79585 Steinen (DE)
(74) Vertreter: Andres, Angelika Maria
(86) Internationale Anmeldenummer: PCT/EP2013/067787
(87) Internationale Veröffentlichungsnummer: WO 2014/048662

(56) Entgegenhaltungen:
- EP-A1- 2 034 281
- GB-A- 2 453 325
- US-A1- 2007 241 203
- US-B1- 7 558 687
- US-B1- 7 653 508

## Beschreibung

Die Erfindung bezieht sich auf ein Messgerät der Prozessautomatisierungstechnik zur Messung mindestens einer Prozessgröße eines Mediums, wobei eine Regel-/Steuereinheit vorgesehen ist, die die Prozessgröße zu mindestens mit einer vorgebbaren Taktrate misst und als ein Messwert bereitstellt, wobei mit der Taktrate ein Energiebedarf des Messgeräts verbunden ist, wobei eine Anzeige-/ Bedieneinheit vorgesehen ist, die den Messwert darstellt und/oder die eine Bedienung bzw. Parametereingabe am Messgerät ermöglicht.

Die Messgeräte, die Messvorrichtungen oder auch die Sensoren der Prozessautomatisierungstechnik überwachen oder messen Prozessgrößen von Medien, die je nach Art des Prozesses - z.B. das Synthetisieren eines Mediums - größeren Änderungen in relativ kleiner Zeit unterliegen. Solche dynamischen Prozesse machen es somit erforderlich, dass die zeitlichen Abstände zwischen den einzelnen Messwerten möglichst gering sein sollten. Es sollte also so oft wie möglich gemessen werden, um eine angemessene zeitliche Auflösung zu erhalten. Dem steht jedoch das Problem des Energiebedarfs für die Messungen entgegen, wobei eine höhere Messgenauigkeit üblicherweise mit einem erhöhten Energiebedarf verbunden ist. Bei 4...20 mA-Messgeräten ist die Energie prinzipiell begrenzt. Je nach Ausgestaltung sind jedoch auch Bauteile - z.B. Netzteile - für höhere Leistungen entsprechend aufwendig oder auch kostenintensiv. Somit ist es also durchaus umständlich, die Anzahl der Messdaten oder Messpunkte zu erhöhen. Eine weitere Begrenzung ist das physikalische Messprinzip, das angewendet wird und das somit auch eine untere Grenze für die zeitliche Auflösung vorgibt. Es kann auch vorkommen, dass eine höhere zeitliche Auflösung nicht ständig erforderlich ist, weil z.B. die gemessene Prozessgröße über einen größeren Zeitraum konstant ist. Der Bedarf kann also je nach Prozessbedingungen unterschiedlich sein.

Desweiteren benötigt das Messgerät auch zur Darstellung des Messwerts auf einem Display oder für die Bedienung und/oder Parametereingabe über eine Bedieneinheit entsprechend Energie.

Der Trend in der Messtechnik ist die Messgeräte so auszugestalten, dass sie möglichst energieeffizient arbeiten: Vierdraht-Messgeräte werden in zunehmendem Maß durch Zweidraht-Messgeräte ersetzt. Bei Zweidraht-Messgeräten erfolgen - im Gegensatz zu Vierdraht-Messgeräten - Energieversorgung und Messwertübertragung über ein und dasselbe Leitungspaar.

Zweidraht-Messgeräte müssen bezüglich ihres Leistungsbedarfs so ausgelegt sein, dass sie stets mit der Leistung betrieben werden können, die aktuell verfügbar ist. Aus der EP 1 301 914 B1 ist ein Zweidraht-Mikrowellen-Messgerät mit getakteter Messrate bekannt geworden. Bei diesem bekannten Messgerät ist die Messrate dahingehend optimiert, dass eine nachfolgende Messung immer erst dann gestartet wird, wenn ausreichend Energie für diese nachfolgende Messung zur Verfügung steht.

In der WO 2004 046 6658 A1 ist eines Ultraschall-Durchflussmessgeräts mit einer Regel-/Auswerteeinheit beschrieben, welche mehrere Komponenten aufweist, von denen zumindest eine einen hohen Leistungsverbrauch hat. Diese Komponente, z.B. ein Verstärker, ein A/D-Wandler, ein Mikroprozessor, wird intermittierend in einer Ruhe- und in einer Messphase betrieben.

Aus der US-PS 6,014,100 ist ein Zweidraht-Radar-Messgerät mit konstanter Taktung der Messrate bekannt geworden, das auf den schlechtesten oder den ungünstigsten anzunehmenden Fall (Worst Case) abstellt und an der unteren Leistungsgrenze arbeitet: Die konstante Taktrate ist über den gesamten Messbereich so ausgelegt, dass im Falle der minimal zur Verfügung stehenden Leistung, also bei einem 4 mA-Signal, sichergestellt ist, dass ausreichend Leistung für die nächste Messung vorhanden ist.
Es versteht sich von selbst, dass es auch bei dieser bekannten Lösung problematisch ist, den Kunden Zusatz-Features in der Bedienung des Messgeräts und der Auswertung des Messwerts zur Verfügung zu stellen. Darüber hinaus besitzt ein Zweidraht-Messgerät mit konstanter Messrate gegenüber einem Messgerät mit variabler Messrate den Nachteil, dass es nahezu über den gesamten Messbereich eine verringerte Messgenauigkeit aufweist.

Neben den Zweidraht-Messgeräten, die pro Zeiteinheit nur eine begrenzte Energie zur Verfügung haben, rücken in der Messtechnik zunehmend Energie autarke Messgeräte in den Fokus. Unter dem Begriff 'Energie autarke Messgeräte' werden Messgeräte subsumiert, die keine drahtgebundenen Leitungen zu einer wie auch immer gearteten entfernten Energiequelle aufweisen. Energie autarke Messgeräte werden z.B. über mindestens eine Batterie, über Funk, über Solarzellen oder Brennstoffzellen mit Energie versorgt. Damit die Betriebsdauer, z.B. der Batterie, möglichst hoch ist, sollten die Messgeräte so ausgestaltet sein, dass sie einen möglichst geringen Leistungsverbrauch haben.

Aufgrund der limitierten verfügbaren Energie ist es oftmals schwierig, den Kunden Zweidraht-Messgeräte mit sogenannten Zusatz-Features anzubieten. Ein klassisches Beispiel für ein Zusatz-Feature der Messgeräte ist ein beleuchtetes Display, ein Touch-Screen zur einfacheren, eine intuitive Eingabe der Parameterdaten oder zur intuitiven Bedienung des Gerätes.

Das Dokument US 2007/241203 A1 betrifft ein HVAC System, welches zur stabilen und komfortablen Regelung einer Temperatur innerhalb eines Gebäudes dient.
Das HVAC System weist einen Controller auf, der in einen Energiesparmodus fährt, sobald ein potentieller Benutzer nicht mehr in der Umgebung einer Anzeige-/ Bedieneinheit ist. Dies kann durch die Reduzierung der Taktrate des Controllers sowie durch Reduzierung der Tastfrequenz des Temperatursensors und der Anzeige-/ Bedieneinheiten ermöglicht werden. Dadurch wird der gesamte Energiebedarf des HVAC Systems reduziert. Sobald ein potentieller Benutzer in der Umgebung einer Anzeige-/Bedieneinheit erfasst wird, wird die Anzeige-/Bedieneinheit in Aktivmodus versetzt und die Taktrate des Controllers sowie die Tastfrequenz des Temperatursensors und der Anzeige-/Bedieneinheiten werden erhöht.

Das Dokument GB 2 453 325 A offenbart ein System und ein Verfahren zur Energieverbrauchsüberwachung, wobei Sensoren sowie Anzeige-/Bedieneinheiten des Systems in einem Aktivmodus und einem Energiesparmodus betreibbar sind. Daten von den Sensoren zu den Anzeige-/Bedieneinheiten werden im Aktivmodus mit einer hohen Taktrate und im Energiesparmodus mit einer niedrigeren Taktrate kommuniziert.

Die Dokumenten US 7 558 687 B1, EP 2 034 281 A1 und US 7 653 508 B1 offenbaren unter anderem den Ansatz der Einführung einer variablen Abtastrate für Messgeräte, um eine optimierte Arbeitsweise hinsichtlich des Energieverbrauchs einerseits und der Messgenauigkeit andererseits zu erzielen.

Der Erfindung liegt die Aufgabe zugrunde, ein Messgerät der Prozessautomatisierungstechnik vorzuschlagen, das ein verbessertes, optimiertes Betreiben bei gleichbleibendem Energiebedarf ermöglicht.

Die Erfindung löst die Aufgabe mittels eines Messgeräts der Prozessautomatisierungstechnik gemäß Anspruch 1.

Eine vorteilhafte Ausgestaltung des erfindungsgemäßen Messgeräts beinhaltet, dass die Anzeige-/ Bedieneinheit im Bedienmodus mit einer dritten Taktrate zur Bedienung bzw. Parametrierung des Messgeräts arbeitet und im Messbetreib mit einer vierten Taktrate zur Darstellung der Messwerte auf einem Display am Messgerät arbeitet, wobei die dritte Taktrate größer als die vierte Taktrate ist.

Eine weiter Ausgestaltung des erfindungsgemäßen Messgeräts sieht vor, dass im Bedienmodus die Abnahme der Taktung der Regel-/Steuereinheit von der zweiten Taktrate auf die erste Taktrate proportional zur Zunahme der Taktung der Anzeige-/ Bedieneinheit von der vierten Taktrate auf die dritte Taktrate ist, so dass der gesamte Energiebedarf des Messgeräts in dem Bedienmodus gleich bleibt.

Eine ergänzende Ausgestaltung des erfindungsgemäßen Messgeräts sieht vor, dass im Messmodus die Zunahme der Taktung der Regel-/Steuereinheit von der ersten Taktrate auf die zweite Taktrate proportional zur Abnahme der Taktung der Anzeige-/ Bedieneinheit von der dritten Taktrate auf die vierte Taktrate ist, so dass der gesamte Energiebedarf des Messgeräts in dem Messmodus gleich bleibt.

In einer besonderen Ausgestaltung des erfindungsgemäßen Messgeräts ist vorgesehen, dass die Anzeige-/ Bedieneinheit derartig ausgestaltet ist, dass bei Eingabe an der Anzeige-/ Bedieneinheit das Messgerät von einem Messmodus in einen Bedienmodus umschaltet.

In einer anreihenden Ausgestaltung des erfindungsgemäßen Messgeräts ist vorgesehen, dass das Messgerät automatisch und/oder zeitgesteuert nach Beendigung der Eingabe über die Bedienelemente an der Anzeige-/Bedieneinheit vom Bedienmodus in den Messmodus zurück umschaltet.

Eine besonders zweckdienliche Ausgestaltung des erfindungsgemäßen Messgeräts beinhaltet, dass das Messgerät über einen Zweidrahtleitung oder einen Feldbus mit einer entfernten Anzeige-/Bedieneinheit oder Leitstelle verbunden ist und automatisch bei einer Eingabe an dieser entfernten Anzeige-/Bedieneinheit oder entfernten Leitstelle vom Messmodus in den Bedienmodus umschaltet.

Die Erfindung wird anhand der nachfolgenden Zeichnung näher erläutert. Es zeigt:

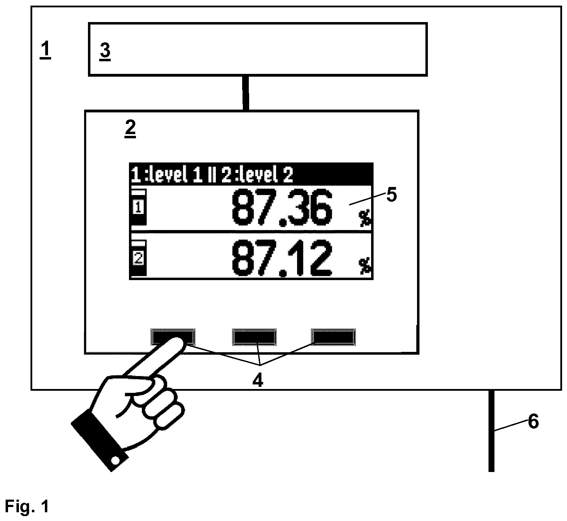

Fig. 1: eine schematische erste Ausgestaltung einer erfindungsgemäßen Messgeräts mit der Anzeige-/Bedieneinheit,

In Fig. 1 ist der Aufbau eines erfindungsgemäßen Messgerät 1 mit einer Anzeige-/Bedieneinheit 2 und einer Zweileiterschnittstelle bzw. Feldbus (6) gezeigt.

Der Erfindung liegt der grundlegende Gedanke zugrunde, dass das Messgerät 1 in mindestens zwei unterschiedlichen Modi betrieben wird: eine Bedienmodus und eine Messmodus. Beide Modi unterscheiden sich hinsichtlich der Taktraten der Regel-/Steuereinheit 3 und der Anzeige-/Bedieneinheit 2. Die Taktraten der Regel-/Steuereinheit 3 und der Anzeige-/Bedieneinheit 2 sind dabei so gewählt, dass der jeweils damit verbundene gesamte Energieverbrauch des Messgeräts 1 im Wesentlichen gleich bleibt. Somit ist also zum einen keine zusätzliche Energie für den Betrieb des Messgeräts 1 erforderlich und zum anderen wird auch jeweils die bereitgestellte Energie im Messgerät 1 maximal ausgenutzt. Im Bedienmodus ist die erste Taktrate der Regel-/Steuereinheit 3 des Messgeräts 1 zur Ausführung und/oder Auswertung der Messung der Prozessgröße kleiner als die zweite Taktrate der Regel-/Steuereinheit 3 im Messmodus. Somit werden in dem Messmodus mehr Messwerte als in dem Bedienmodus gemessen, was gleichzeitig bedeutet, dass die zeitliche Auflösung in dem Messmodus größer ist. Somit lassen sich im Messmodus Änderungen der Prozessgröße zeitlich besser überwachen. Durch die Reduzierung auf die erste Taktrate der Regel-/Steuereinheit 3 im Messgerät 1 zur Ermittlung des Messwerts wird hierbei bereitstehende Energie eingespart, die für die Bedienung des Messgeräts 1 über die Anzeige-/Bedieneinheit 2 verwendet wird. Die Anzeige-/Bedieneinheit 2 kann durch die höhere, bereitstehende Energie mit einer höheren Änderungsrate der Anzeige auf dem Display 5 bzw. einer dritten Taktrate betrieben werden oder die Abfrage der Eingabe über die Bedienelemente 4 kann in einer höheren Abfragerate bzw. einer dritten Taktrate erfolgen. Grundlegend wird die Energie, die in der Regel-/Steuereinheit 3 des Messgeräts 1 durch Reduzierung auf die erste Taktrate zur Messung der Prozessgröße eingespart wird, wieder in der Anzeigeeinheit 2, z.B. durch Erhöhung auf die dritte Taktrate zur Änderung der Anzeige auf dem Display 5 oder zur Abfrage der Bedienelemente 4 verwendet. Während der Konfiguration oder Bedienung am Messgerät 1 ist die hohe Aktualisierungsrate der Messwerte nicht mehr so wichtig, wie außerhalb des Zeitraumes in dem das Messgerät 1 konfiguriert wird. Sondern man möchte dem Kunden eine schnelle und einfachere Bedienung des Messgeräts 1 während diesem Zeitraum der Bedienung und/oder Konfiguration ermöglichen und in der restlichen Betriebszeit eine schnelle, exakte Messung der Prozessgröße durch das Messgerät 1 ermöglichen.

### Bezugszeichenliste

- 1: Messgerät
- 2: Anzeige-/Bedieneinheit
- 3: Regel/Steuereinheit
- 4: Bedienelemente
- 5: Display
- 6: Feldbus, Zweileiterdrahtleitung

## Patentansprüche

1. Messgerät (1) der Prozessautomatisierungstechnik zur Messung mindestens einer Prozessgröße eines Mediums,
wobei eine Regel-/Steuereinheit (3) vorgesehen ist, die die Prozessgröße zumindestens mit einer vorgebbaren Taktrate misst und als ein Messwert bereitstellt, wobei mit der Taktrate ein Energiebedarf des Messgeräts (1) verbunden ist,
wobei eine Anzeige-/ Bedieneinheit (2) vorgesehen ist, die den Messwert darstellt und/oder die eine Bedienung bzw. Parametereingabe am Messgerät (1) ermöglicht, dass die Anzeige-/ Bedieneinheit (2) die Regel-/Steuereinheit (3) des Messgeräts (1) von einem Messmodus in einen Bedienmodus umschaltet,
wobei in dem Bedienmodus die Regel-/Steuereinheit (3) die Prozessgröße mit einer ersten Taktrate misst,
wobei in dem Messmodus die Regel-/Steuereinheit (3) mit einer zweiten Taktrate misst,
**dadurch gekennzeichnet, dass**
die erste Taktrate und die zweite Taktrate derartig festgelegt sind, dass die zweite Taktrate größer als die erste Taktrate ist, wobei die Energie, die in der Regel- / Steuereinheit (3) im Messgerät (1) durch Reduzierung auf die erste Taktrate zur Messung der Prozessgröße eingespart wird, für die Bedienung des Messgerätes über die Anzeige-/Bedieneinheit so verwendet wird, dass der gesamte Energiebedarf des Messgeräts (1) in dem Bedienmodus und in dem Messmodus gleich ist.

2. Vorrichtung nach Anspruch 1,
**dadurch gekennzeichnet,**
**dass** die Anzeige-/ Bedieneinheit (2) im Bedienmodus mit einer dritten Taktrate zur Bedienung bzw. Parametrierung des Messgeräts (1) arbeitet und im Messbetreib mit einer vierten Taktrate zur Darstellung der Messwerte auf einem Display (5) am Messgerät (1) arbeitet, wobei die dritte Taktrate größer als die vierte Taktrate ist.

3. Vorrichtung nach Anspruch 2,
**dadurch gekennzeichnet,**
**dass** im Bedienmodus die Abnahme der Taktung der Regel-/Steuereinheit (3) von der zweiten Taktrate auf die erste Taktrate proportional zur Zunahme der Taktung der Anzeige-/ Bedieneinheit (2) von der vierten Taktrate auf die dritte Taktrate ist, so dass der gesamte Energiebedarf des Messgeräts (1) in dem Bedienmodus gleich bleibt.

4. Vorrichtung nach Anspruch 2 oder 3,
**dadurch gekennzeichnet,**
**dass** im Messmodus die Zunahme der Taktung der Regel-/Steuereinheit (3) von der ersten Taktrate auf die zweite Taktrate proportional zur Abnahme der Taktung der Anzeige-/ Bedieneinheit (2) von der dritten Taktrate auf die vierte Taktrate ist, so dass der gesamte Energiebedarf des Messgeräts (1) in dem Messmodus gleich bleibt.

5. Vorrichtung nach Anspruch 2, 3 oder 4,
**dadurch gekennzeichnet,**
**dass** die Anzeige-/ Bedieneinheit (2) derartig ausgestaltet ist, dass bei Eingabe an der Anzeige-/ Bedieneinheit (2) das Messgerät (1) von einem Messmodus in einen Bedienmodus umschaltet.

6. Vorrichtung nach zumindest einem der vorhergehenden Ansprüche,
**dadurch gekennzeichnet,**
**dass** das Messgerät (1) automatisch und/oder zeitgesteuert nach Beendigung der Eingabe über die Bedienelemente (4) an der Anzeige-/Bedieneinheit (2) vom Bedienmodus in den Messmodus zurück umschaltet.

7. Vorrichtung zumindest einem der vorhergehenden Ansprüche,
**dadurch gekennzeichnet,**
**dass** das Messgerät (1) über einen Zweidrahtleitung (6) oder einen Feldbus (6) mit einer entfernten Anzeige-/Bedieneinheit (2) oder Leitstelle verbunden ist und automatisch bei einer Eingabe an dieser entfernten Anzeige-/Bedieneinheit (2) oder entfernten Leitstelle vom Messmodus in den Bedienmodus umschaltet.

## Claims

1. Measuring device (1) used in process automation technology to measure at least one process variable of a medium,
wherein a regulation/control unit (3) is provided, which measures the process variable at least at a predefinable clock rate and makes it available as a measured value, wherein an energy demand of the measuring device (1) is associated with the clock rate,
wherein a display/operation unit (2) is provided, which displays the measured value and/or which enables operation or parameter entry at the measuring device (1),
wherein the display/operation unit (2) switches the regulation/control unit (3) of the measuring device (1) from a measuring mode to an operating mode, wherein, in the operating mode, the regulation/control unit (3) measures the process variable at a first clock rate,
wherein, in the measuring mode, the regulation/control unit (3) measures at a second clock rate
**characterized in that**
the first clock rate and the second clock rate are defined in such a way that the second clock rate is greater than the first clock rate, wherein the energy that is saved in the regulation/control unit (3) in the measuring device (1) by reducing to the first clock rate to measure the process variable is used to operate the measuring device via the display/operation unit in such a way that the total energy demand of the measuring device (1) is identical in the operating mode and in the measuring mode.

2. Apparatus as claimed in Claim 1,
**characterized in that**
in the operating mode, the display/operation unit (2) works at a third clock rate to operate and/or configure the measuring device and, in the measuring mode, works at a fourth clock rate to display the measured values on a display (5) on the measuring device (1), wherein the third clock rate is greater than the fourth clock rate.

3. Apparatus as claimed in Claim 2,
**characterized in that**
in the operating mode, the reduction in the clock pace of the regulation/control unit (3) from the second clock rate to the first clock rate is proportional to the increase in the clock pace of the display/operation unit (2) from the fourth clock rate to the third clock rate such that the total energy demand of the measuring device (1) remains identical in the operating mode.

4. Apparatus as claimed in Claim 2 or 3,
**characterized in that**
in the measuring mode, the increase in the clock pace of the regulation/control unit (3) from the first clock rate to the second clock rate is proportional to the decrease in the clock pace of the display/operation unit (2) from the third clock rate to the fourth clock rate such that the total energy demand of the measuring device (1) remains identical in the measuring mode.

5. Apparatus as claimed in Claim 2, 3 or 4,
**characterized in that**
the display/operation unit (2) is designed in such a way that when an entry is made at the display/operation unit (2) the measuring device (1) switches from a measuring mode to an operating mode.

6. Apparatus as claimed in at least one of the previous claims,
**characterized in that**
the measuring device (1) switches back from the operating mode to the measuring mode automatically and/or in a time-controlled manner on completion of the entry via the operating elements (4) at the display/operation unit (2).

7. Apparatus as claimed in at least one of the previous claims,
**characterized in that**
the measuring device (1) is connected to a remote display/operation unit (2) or control station via a two-wire line (6) or a fieldbus and automatically switches from the measuring mode to the operating mode when an entry is made at this remote display/operation unit (2) or remote control station.

## Revendications

1. Appareil de mesure (1) de la technique d'automatisation destiné à la mesure d'au moins une grandeur process d'un produit,
pour lequel est prévue une unité de régulation / commande (3), qui mesure la grandeur process au moins avec une cadence prédéfinie et la met à disposition sous forme de valeur mesurée, un besoin en énergie de l'appareil de mesure (1) étant associé à la cadence,
pour lequel est prévue une unité d'affichage / de commande (2), qui représente la valeur mesurée et/ou permet l'utilisation ou l'entrée de paramètres sur l'appareil de mesure (1), en ce que l'unité d'affichage / de commande (2) commute l'unité de régulation / commande (3) de l'appareil de mesure (1) d'un mode de mesure dans un mode de service,
l'unité de régulation / commande (2) mesurant, dans le mode de mesure, avec une deuxième cadence,
**caractérisé**
**en ce que** la première cadence et la deuxième cadence sont définies de telle sorte que la deuxième cadence est supérieure à la première cadence, l'énergie qui est économisée dans l'unité de régulation / commande (3) intégrée dans l'appareil de mesure (1) par la réduction à la première cadence pour la mesure de la grandeur process, étant utilisée pour la commande de l'appareil de mesure via l'unité d'affichage / de commande de telle sorte que le besoin total en énergie de l'appareil de mesure (1) est identique en mode de service et en mode de mesure.

2. Dispositif selon la revendication 1,
**caractérisé**
**en ce que** l'unité d'affichage / de commande (2) fonctionne, en mode de service, avec une troisième cadence pour la commande ou le paramétrage de l'appareil de mesure (1) et, en mode de mesure, avec une quatrième cadence pour la représentation des valeurs mesurées sur un afficheur (5) se trouvant sur l'appareil de mesure (1), la troisième cadence étant supérieure à la quatrième cadence.

3. Dispositif selon la revendication 2,
**caractérisé**
**en ce qu'**en mode de service, la réduction de la cadence de l'unité de régulation / commande (3) de la deuxième cadence à la première cadence est proportionnelle à l'augmentation de la cadence de l'unité d'affichage / de commande (2) de la quatrième cadence à la troisième cadence sont telles que le besoin total en énergie de l'appareil de mesure (1) reste identique en mode de service.

4. Dispositif selon la revendication 2 ou 3,
**caractérisé**
**en ce qu'**en mode de mesure, l'augmentation de la cadence de l'unité de régulation / commande (3) de la première cadence à la deuxième cadence est proportionnelle à la réduction de la cadence de l'unité d'affichage / de commande (2) de la troisième cadence à la quatrième cadence sont telles que le besoin total en énergie de l'appareil de mesure (1) reste identique en mode de mesure.

5. Dispositif selon la revendication 2, 3 ou 4,
**caractérisé**
**en ce que** l'unité d'affichage / de commande (2) est conçue de telle sorte qu'en cas d'entrée sur l'unité d'affichage / de commande (2), l'appareil de mesure (1) est commuté d'un mode de mesure dans un mode de service.

6. Dispositif selon au moins l'une des revendications précédentes,
**caractérisé**
**en ce que** l'appareil de mesure (1) recommute automatiquement et/ou de manière commandée en temps du mode de service en mode de mesure, après la fin de l'entrée via les éléments de commande (4) sur l'unité d'affichage / de commande (2).

7. Dispositif selon au moins l'une des revendications précédentes,
**caractérisé**
**en ce que** l'appareil de mesure (1) est relié via un câble bifilaire (6) ou un bus de terrain (6) avec une unité d'affichage / de commande (2) ou un système numérique de contrôle-commande déporté(e), et commute automatiquement du mode de mesure en mode de service lors d'une entrée sur cette unité d'affichage / de commande (2) déportée ou sur le système numérique de contrôle-commande déporté.
